# EUROPEAN PATENT SPECIFICATION

(11) **EP 4 067 293 B1**
(45) Date of publication and mention of the grant of the patent: **12.02.2025**
(21) Application number: 21210400.4
(22) Date of filing: 25.11.2021
(51) Int. Cl.: B66F 17/00

(54) **SYSTEM COMPRISING VEHICLES WITH APPROACH NOTIFICATION DEVICES**
SYSTEM AUFWEISEND FAHRZEUGEN MIT VORRICHTUNGEN ZUR MELDUNG DER ANNÄHERUNG EINES FAHRZEUGS
SYSTÈME COMPRENANT VÉHICULES MUNIS D'UN DISPOSITIF DE NOTIFICATION D'APPROCHE DE VÉHICULE

(30) Priority: 30.03.2021 JP 2021057762; 30.03.2021 JP 2021057763
(43) Date of publication of application: 05.10.2022
(73) Proprietor: Mitsubishi Logisnext Co., Ltd., Nagaokakyo-shi, Kyoto 617-8585 (JP)
(72) Inventor: TERAO, Ryohei, Kyoto, 617-8585 (JP)
(74) Representative: Becker, Eberhard

(56) References cited:
- DE-A1- 102006 002 960
- DE-A1- 102019 202 734
- JP-A- 2000 344 005

## Description

### BACKGROUND

### [Technical Field]

The present invention relates to a system comprising a plurality of vehicles, each provided with a vehicle approach notification device that notifies a person in the vicinity and another vehicle travelling in the vicinity of approach of a vehicle by irradiating a light toward a road surface on a rear side of the vehicle.

### [Description of Related Art]

Conventionally, it is known that an industrial vehicle irradiates a notification light toward a road surface on a rear side of the vehicle in order to notify a person in the vicinity of the vehicle of the approach of the vehicle (see, for example, Patent Document 1). In addition, some of industrial vehicles called picking trucks are also configured to be capable of irradiating a notification light.

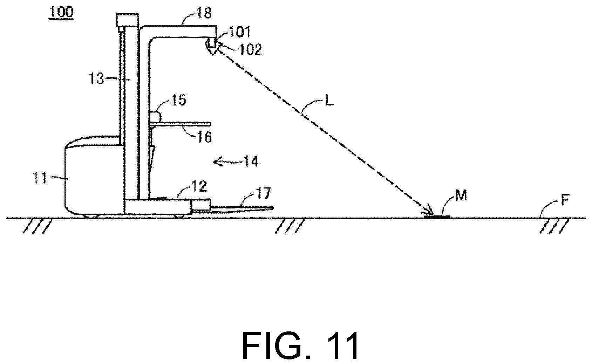

FIG. 11 shows a picking truck 100 configured as described above. As shown in the figure, the picking truck 100 includes a vehicle body 11 having a travelling device, a mast 13 provided on a rear side of the vehicle body 11, a driving cab 14 capable of being lifted and lowered along the mast 13, a pair of left and right forks 17 and 17 that are lifted and lowered together with the driving cab 14, and an illumination part 102 disposed at a head guard 18 of the driving cab 14 via a suitable bracket 101. The illumination part 102 irradiates a notification light L toward a road surface F on the rear side of the vehicle and displays a mark M on the road surface F.

Patent literature DE 10 2019202734 A1, which discloses a system comprising the features of the preamble of independent claim 1, describes a method for avoiding a collision with an industrial truck, in a first step, a current dynamic parameter of the industrial truck is determined; in a further step, a light is emitted as a function of the determined current dynamic parameter with a light source arranged on the industrial truck in order to warn of a collision with the industrial truck.

### Related Art

### Patent Document(s)

[Patent Document 1] Japanese Patent Application Laid-Open No. 2014-141329

### SUMMARY

### Problems to be Solved

However, the notification by the conventional picking truck 100 is insufficient for other picking trucks operating (travelling) in the same operation area. That is because the approach speed between picking trucks is higher than the approach speed between a picking truck and a person, and even if a passenger of another picking truck notices the mark M and performs an operation to avoid collision, it is likely that collision cannot be timely avoided.

If the mark M is displayed far away from the vehicle, the above problem may be solved. However, if such a measure is taken, another problem arises, that is, the mark M is also noticed by a person far away from the vehicle and may cause annoyance to this person.

The present invention has been made in view of the above circumstances, and an objective of the present invention is to provide a vehicle approach notification device capable of effectively notifying a person in the vicinity and another vehicle travelling in the vicinity of the approach of a vehicle, and a picking truck provided with the device.

### Means for Solving the Problems

To solve the above problems, a system according to independent claim 1 is provided wherein a vehicle approach notification device is provided in each of a plurality of vehicles travelling within a predetermined operation area, which includes an illumination part, an irradiation direction change part, and a control part. The illumination part is disposed at a driving cab of the vehicle and irradiates a notification light toward a road surface on a rear side of the vehicle, and the driving cab is capable of being lifted and lowered. The irradiation direction change part changes an irradiation direction by changing a configuration angle of the illumination part with respect to the driving cab. The control part changes a command associated with the configuration angle sent to the irradiation direction change part based on own-vehicle information associated with an own vehicle and other-vehicle information associated with another vehicle. The own-vehicle information includes a current position of the own vehicle in the operation area. The other-vehicle information includes a current position of the another vehicle in the operation area, a tire angle of the another vehicle, and a speed of the another vehicle. In a case where (1) the current position of the another vehicle is within a predetermined monitoring area set on a rear side of the own vehicle, (2) a predicted position of the another vehicle after a predetermined time predicted from the current position, the tire angle, and the speed of the another vehicle is within the monitoring area after the predetermined time, and (3) the predicted position of the another vehicle is closer to a predicted position of the own vehicle than the current position of the another vehicle, the control part changes the command sent to the irradiation direction change part.

The own-vehicle information further includes a tire angle of the own vehicle and a speed of the own vehicle. The monitoring area after the predetermined time is a monitoring area after the predetermined time predicted from the current position, the tire angle, and the speed of the own vehicle. The predicted position of the own vehicle is a position of the own vehicle after the predetermined time predicted from the current position, the tire angle, and the speed of the own vehicle.

The case where the predicted position of the another vehicle is closer to the predicted position of the own vehicle than the current position of the another vehicle includes a case where a distance between the current position of the own vehicle and the current position of the another vehicle is longer than a distance between the predicted position of the own vehicle and the predicted position of the another vehicle.

When (1), (2), and (3) above are satisfied, the control part of the vehicle approach notification device may be configured to send the irradiation direction change part the command so that a position of the road surface to be irradiated moves away from the own vehicle.

The control part of the vehicle approach notification device may be configured to acquire vehicle information associated with the another vehicle as the other-vehicle information from a management device that stores vehicle information associated with each of the plurality of vehicles.

The own-vehicle information in the vehicle approach notification device may further include a lifting position of the driving cab, and in this case, the control part may send the command to the irradiation direction change part so that a position of the road surface to be irradiated does not change even if the lifting position changes.

The monitoring area in the vehicle approach notification device may have a substantially triangular shape or a substantially fan shape of which a dimension in a vehicle width direction increases as a distance from the rear side of the own vehicle increases.

Further, to solve the above problems, the vehicles of the system are picking trucks.

### Effects

According to the present invention, it is possible to provide a system comprising a plurality of vehicles, each provided with a vehicle approach notification device capable of effectively notifying a person in the vicinity and another vehicle travelling in the vicinity of the approach of a vehicle, and aplurality of picking trucks provided with such a device.

### BRIEF DESCRIPTION OF THE DRAWINGS

FIG. 1 is a schematic side view showing a picking truck according to a first embodiment of the present invention.
FIG. 2 is a block diagram showing a configuration of a vehicle approach notification device and a picking truck according to the first embodiment.
FIG. 3(A) is a plan view showing the relationship between a current position P1 and a predicted position P1a of an own vehicle 10A-1, a current position P2 and predicted positions P2a, P2b, and P2c of another vehicle 10A-2, a current monitoring area 40, and a monitoring area 40a after a predetermined time.
FIG. 3(B) is a modification example of FIG. 3(A) and is a plan view showing the relationship between the current position P1 of the own vehicle 10A-1, the current position P2 and the predicted positions P2a, P2b, and P2c of the another vehicle 10A-2, and the monitoring area 40, when the own vehicle does not move or does not move temporarily.
FIG. 4 is a graph showing (A) the relationship between satisfaction/non-satisfaction of three predetermined conditions and an irradiation direction *θ*, and (B) the relationship between satisfaction/non-satisfaction of the three predetermined conditions and an irradiation distance D, according to the first embodiment.
FIG. 5 is a view showing a specific configuration of the vehicle approach notification device according to the first embodiment.
FIG. 6 is a schematic side view showing a picking truck according to a second embodiment of the present invention.
FIG. 7 is a block diagram showing a configuration of a vehicle approach notification device and a picking truck according to the second embodiment.

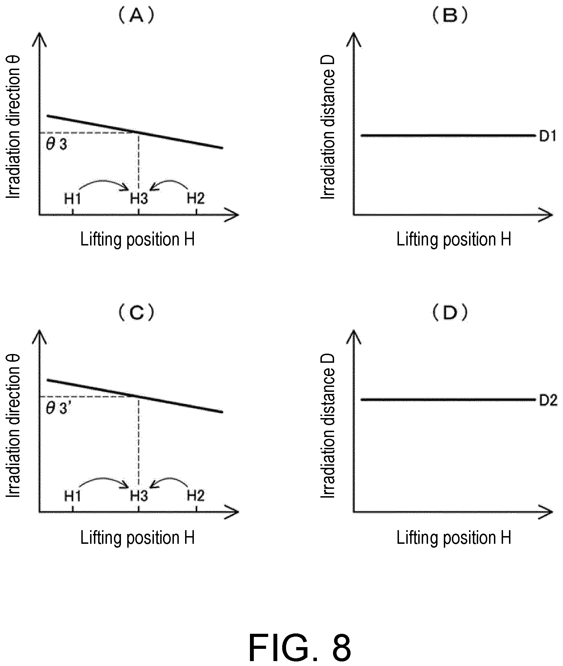

FIG. 8 is a graph showing (A) the relationship between a lifting position H and the irradiation direction *θ* when the three predetermined conditions are not satisfied; (B) the relationship between the lifting position H and the irradiation distance D when the three predetermined conditions are not satisfied; (C) the relationship between the lifting position H and the irradiation direction *θ* when the three predetermined conditions are satisfied; and (D) the relationship between the lifting position H and the irradiation distance D when the three predetermined conditions are satisfied, according to the second embodiment.
FIG. 9 is a schematic side view showing (A) the picking truck at the time of low lift and (B) the picking truck at the time of high lift according to the second embodiment.
FIG. 10 is a plan view showing modification examples of the monitoring area.
FIG. 11 is a schematic side view showing a conventional picking truck.

### DESCRIPTION OF THE EMBODIMENTS

Hereinafter, embodiments of a picking truck and a vehicle approach notification device according to the present invention will be described with reference to the accompanying drawings.

### [First Embodiment]

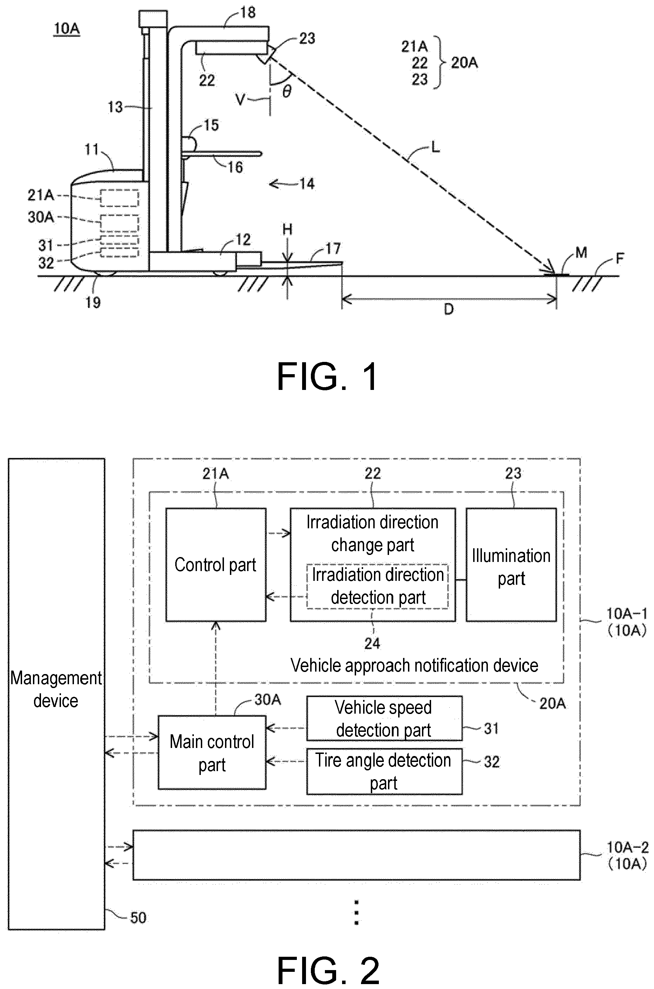

FIG. 1 shows a picking truck 10A according to a first embodiment of the present invention. The picking truck 10A is a vehicle that operates (travels) with another picking truck 10A in a predetermined operation area, and as shown in the figure, includes a vehicle body 11 having travelling device, a pair of left and right legs 12 and 12 and a mast 13 provided on the rear side of the vehicle body 11, and a driving cab 14 that may be lifted and lowered along the mast 13. The travelling device includes a tire 19 that serves both as a driving wheel and a steering wheel.

The driving cab 14 has an operation panel 15 composed of various levers and the like operated by a passenger, a fall guard 16 for preventing the passenger from falling, a pair of left and right forks 17 and 17 extending toward the rear side, and a head guard 18 covering above the passenger's head. The forks 17 and 17 are provided at the floor plate of the driving cab 14.

The picking truck 10A according to this embodiment further includes a control part 21A, an irradiation direction change part 22, and an illumination part 23, which constitute a vehicle approach notification device 20A, a main control part 30A, a vehicle speed detection part 31, and a tire angle detection part 32. The irradiation direction change part 22 includes an irradiation direction detection part 24 (not shown in FIG. 1).

The illumination part 23 is composed of an LED light that irradiates a notification light L toward a road surface F on the rear side of the vehicle. An image (hereinafter referred to as a "mark") M of the notification light L shown on the road surface F may have a circular shape with a blurred outline, or may have a spot shape, a line shape, or an arrow shape with a clear outline by the effect of lenses or slits provided in the illumination part 23. Further, the color of the notification light L (mark M) is preferably a color that stands out with respect to the road surface F in order to enhance the notification effect. In this embodiment, the mark M has a blue line shape extending in the vehicle width direction.

The irradiation direction change part 22 changes an irradiation direction (in this embodiment, a direction *θ* with respect to a vertical line V) by changing a configuration angle of the illumination part 23 with respect to the driving cab 14 (the head guard 18 in this embodiment) based on a command from the control part 21A.

The control part 21A changes the command sent to the irradiation direction change part 22 according to whether another vehicle that satisfies all of three conditions to be described later is present. At this time, the control part 21A refers to a detection result of the irradiation direction detection part 24 which directly or indirectly detects the irradiation direction *θ*.

As shown in FIG. 2, the picking truck 10A (10A-1, 10A-2 ...) according to this embodiment wirelessly communicates with a management device 50.

Specifically, the main control part 30A of the picking truck 10A-1 transmits and stores own-vehicle information to the management device 50 by wireless communication, and the own-vehicle information includes a vehicle speed detected by the vehicle speed detection part 31, an angle of the tire 19 (hereinafter referred to as a "tire angle") detected by the tire angle detection part 32, and a current position in the operation area obtained by performing a calculation therefrom. At this time, the main control part 30A also sends the own-vehicle information to the control part 21A.

Another picking truck 10A-2 ... also transmits and stores own-vehicle information to the management device 50. As a result, the management device 50 collects the own-vehicle information of all the picking trucks 10A-1, 10A-2 ... operating in the operation area. The own-vehicle information of the picking truck 10A-2 stored in the management device 50 is other-vehicle information for the picking truck 10A-1.

The main control part 30A of the picking truck 10A-1 receives the other-vehicle information (i.e., the own-vehicle information of the picking truck 10A-2 ...) stored in the management device 50 by wireless communication and sends it to the control part 21A. The main control part 30A of the another picking truck 10A-2 ... also receives the other-vehicle information from the management device 50 and sends it to the control part 21A.

In this manner, the control part 21A of the vehicle approach notification device 20A provided in each picking truck 10A acquires the own-vehicle information including the current position, the vehicle speed, and the tire angle of the own vehicle, and the other-vehicle information including the current position, the vehicle speed, and the tire angle of other vehicles. Then, the control part 21A changes the command sent to the irradiation direction change part 22 based on the acquired own-vehicle information and other-vehicle information to change the irradiation direction *θ* and an irradiation distance D. When the own vehicle does not move or does not move temporarily, it is also possible not to have information such as the vehicle speed and the tire angle of the own vehicle.

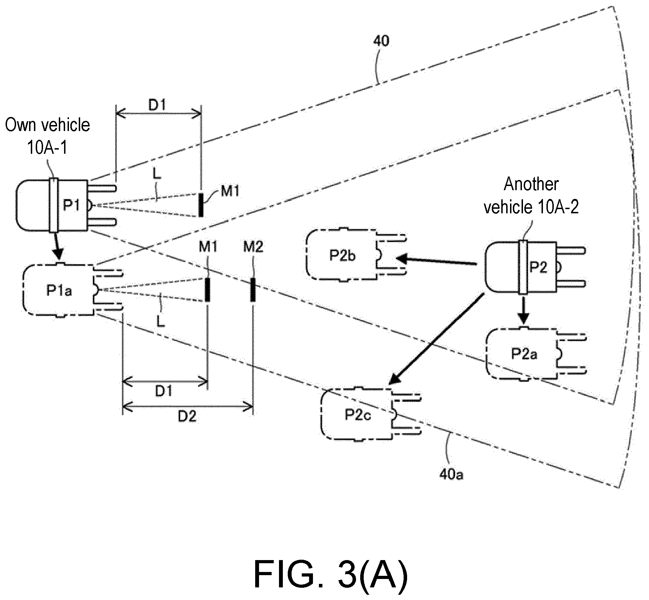

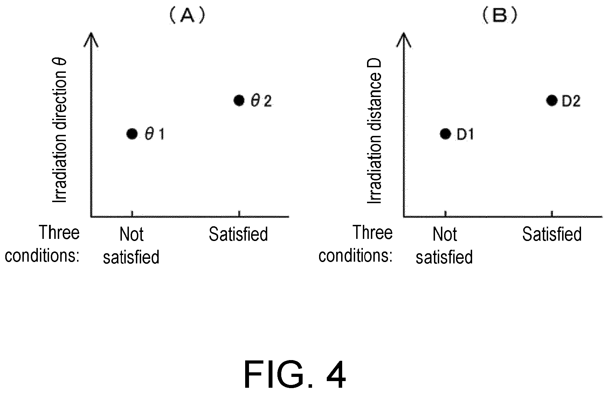

The change to the irradiation direction *θ* and the irradiation distance D made by the control part 21A will be described in detail with reference to FIG. 3(A) and FIG. 4.

Upon acquiring the own-vehicle information and the other-vehicle information, based on a current position P1 of the picking truck 10A-1 (hereinafter also referred to as "own vehicle") included in the own-vehicle information and a current position P2 of another picking truck 10A-2 (hereinafter also referred to as "another vehicle") included in the other-vehicle information, the control part 21A of the picking truck 10A-1 (own vehicle) performs a first determination of determining whether the current position P2 of the another vehicle 10A-2 is within a predetermined monitoring area 40 set on the rear side of the own vehicle 10A-1. In the example shown in FIG. 3(A), it is determined that the current position P2 of the another vehicle 10A-2 is within the monitoring area 40.

The monitoring area 40 has a substantially fan shape of which the dimension in the vehicle width direction increases as the distance from the rear side of the own vehicle 10A-1 increases.

After the first determination, the control part 21A of the own vehicle 10A-1 performs a second determination of determining whether a predicted position after a predetermined time (after 2 seconds in embodiment) predicted from the current position P2, the vehicle speed, and the tire angle of the another vehicle 10A-2 included in the other-vehicle information is within a monitoring area 40a after the predetermined time (after 2 seconds in this embodiment) predicted from the current position P1, the vehicle speed, and the tire angle of the own vehicle 10A-1 included in the own-vehicle information. When the predicted position is P2a, it is determined that the predicted position is within the monitoring area 40a. When the predicted position is P2b, it is also determined that the predicted position is within the monitoring area 40a. In contrast, when the predicted position is P2c, it is determined that the predicted position is not within the monitoring area 40a.

After the second determination, based on the current position P1 of the own vehicle 10A-1, the current position P2 of the another vehicle 10A-2, the predicted position P1a after the predetermined time (after 2 seconds in this embodiment) predicted from the current position P1, the vehicle speed, and the tire angle of the own vehicle 10A-1, and the predicted position of the another vehicle 10A-2 predicted at the time of the second determination, the control part 21A of the own vehicle 10A-1 performs a third determination of determining whether a distance PD between the current position P1 and the current position P2 is longer than a distance PD' between the predicted position P1a of the own vehicle 10A-1 and the predicted position of the another vehicle 10A-2. In other words, in the third determination, it is determined whether the predicted position of the another vehicle 10A-2 is closer to the predicted position of the own vehicle 10A-1 than the current position of the another vehicle 10A-2. When the predicted position is P2b, it is determined that the distance PD is longer than the distance PD'. When the predicted position is P2c, it is also determined that the distance PD is longer than the distance PD'. In contrast, when the predicted position is P2a, it is determined that the distance PD is equal to the distance PD'. If the own vehicle 10A-1 does not move or does not move temporarily, it is also possible not to have information such as the vehicle speed and the tire angle of the own vehicle 10A-1. It may be determined whether the predicted position of the another vehicle 10A-2 is closer to the current position of the own vehicle 10A-1 than the current position of the another vehicle 10A-2.

The control part 21A of the own vehicle 10A-1 performs the same determination for all the other vehicles operating within the operation area.

An another vehicle with which the current position is determined to be within the monitoring area 40 in the first determination, the predicted position is determined to be within the monitoring area 40a in the second determination, and the distance PD is determined to be longer than the distance PD' in the third determination, i.e., an another vehicle that satisfies three predetermined conditions, may collide with the rear side of the own vehicle 10A-1 if continuing in this manner. Therefore, when such another vehicle is present, the control part 21A of the own vehicle 10A-1 changes the command sent to the irradiation direction change part 22 to change the irradiation direction *θ* from *θ*1 to *θ*2 (see (A) of FIG. 4). As a result, the irradiation distance D changes from D1 to D2 (see (B) of FIG. 4), and the position of the mark M changes from M1 to M2 (see FIG. 3(A)). In other words, the mark M moves away from the own vehicle. As a result, the passenger of the another vehicle, which may collide with the own vehicle 10A-1, can quickly notice the presence of the own vehicle 10A-1.

### [Modification Example]

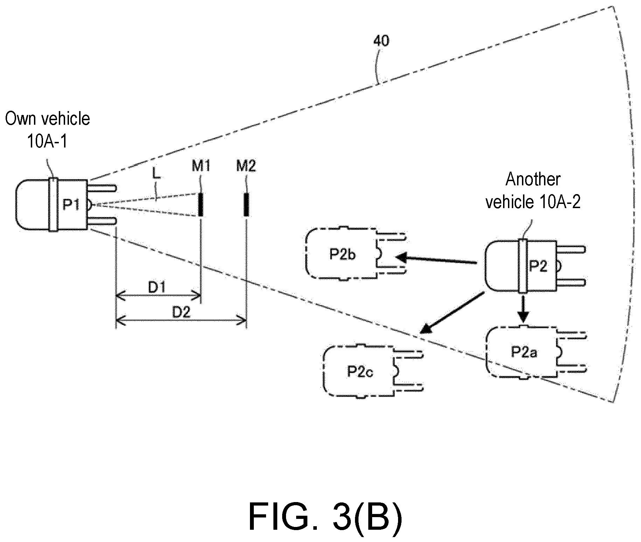

When the own vehicle 10A-1 does not move or does not move temporarily, it is also possible not to have information such as the vehicle speed and the tire angle of the own vehicle 10A-1. At that time, FIG. 3(A) may be simplified as FIG. 3(B). The second determination and the third determination as described above may be changed as follows.

As a modification example of the second determination, when the own vehicle 10A-1 does not move or does not move temporarily, as shown in FIG. 3(B), after the first determination, the control part 21A of the own vehicle 10A-1 performs a second determination of determining whether a predicted position after a predetermined time (after 2 seconds in this embodiment) predicted from the current position P2, the vehicle speed, and the tire angle of the another vehicle 10A-2 included in the other-vehicle information is within the monitoring area 40. When the predicted position is P2a, it is determined that the predicted position is within the monitoring area 40. When the predicted position is P2b, it is also determined that the predicted position is within the monitoring area 40. In contrast, when the predicted position is P2c, it is determined that the predicted position is not within the monitoring area 40.

As a modification example of the third determination, after the second determination, based on the current position P1 of the own vehicle 10A-1, the current position P2 of the another vehicle 10A-2, and the predicted position of the another vehicle 10A-2 predicted at the time of the second determination, the control part 21A of the own vehicle 10A-1 performs a third determination of determining whether the predicted position is closer to the current position P1 than the current position P2. When the predicted position is P2b, it is determined that the predicted position is closer than the current position P2. When the predicted position is P2c, it is also determined that the predicted position is closer than the current position P2. In contrast, when the predicted position is P2a, it is determined that the predicted position is farther than the current position P2.

An another vehicle of which the current position is determined to be within the monitoring area 40 in the first determination, the predicted position is determined to be within the monitoring area 40 in the second determination, and the predicted position is determined to be closer to the current position of the own vehicle than the current position in the third determination, i.e., an another vehicle that satisfies the three predetermined conditions, may collide with the rear side of the own vehicle 10A-1 if continuing in this manner. Therefore, when such another vehicle is present, the control part 21A of the own vehicle 10A-1 changes the command sent to the irradiation direction change part 22 to change the irradiation direction *θ* from *θ*1 to *θ*2 (see (A) of FIG. 4). As a result, the irradiation distance D changes from D1 to D2 (see (B) of FIG. 4), and the position of the mark M changes from M1 to M2 (see FIG. 3(B)). In other words, the mark M moves away from the own vehicle. As a result, the passenger of the another vehicle, which may collide with the own vehicle 10A-1, can quickly notice the presence of the own vehicle 10A-1. On the other hand, when an another vehicle that satisfies the three predetermined conditions is not present, the control part 21A of the own vehicle 10A-1 maintains the irradiation direction *θ* at *θ*1 without changing the command sent to the irradiation direction change part 22.

In this embodiment, the irradiation direction change part 22 which changes the irradiation direction *θ* under the control of the control part 21A has the following configuration.

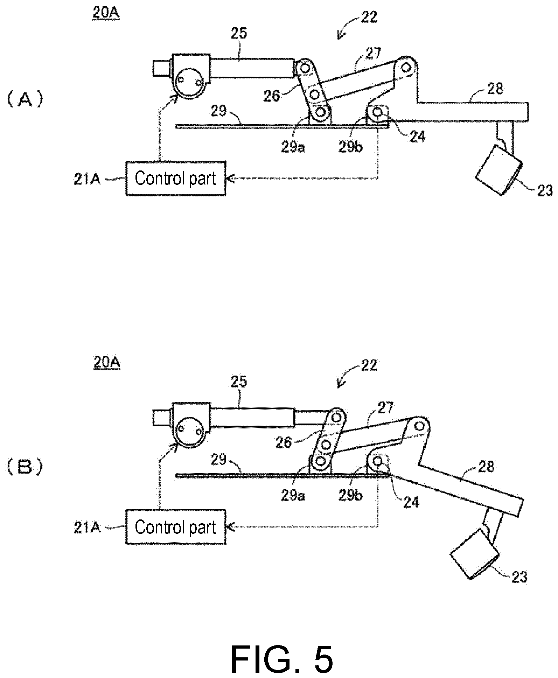

In other words, as shown in FIG. 5, the irradiation direction change part 22 is composed of a power cylinder 25 provided on the lower surface of the head guard 18, a link mechanism including three link members 26, 27, and 28, a support member 29 suspended from the lower surface of the head guard 18, and the irradiation direction detection part 24.

The power cylinder 25 includes a motor that rotates according to the command from the control part 21A. When the motor rotates according to the command, the power cylinder 25 expands and contracts along the front-rear direction of the picking truck 10A by an amount corresponding to the rotation amount of the motor. The command includes a command associated with a rotation direction and a command associated with a rotation speed.

One end portion of the first link member 26 is rotatably connected to a tip portion of the power cylinder 25, and the other end portion is rotatably connected to a front connecting portion 29a of the support member 29. One end portion of the second link member 27 is rotatably connected to a middle portion of the first link member 26, and the other end portion is rotatably connected to a front upper end portion of the third link member 28. A front lower end portion of the third link member 28 is rotatably connected to a rear connecting portion 29b of the support member 29. Then, the illumination part 23 is fixed to a rear end portion of the third link member 28.

The irradiation direction detection part 24 is composed of a potentiometer provided at the rear connecting portion 29b of the support member 29. The irradiation direction detection part 24 detects the position of the third link member 28 with respect to the rear connecting portion 29b and outputs a signal associated with the detection result to the control part 21A. This signal may be said to correspond to the irradiation direction *θ*.

When the power cylinder 25 expands and contracts according to the command from the control part 21A, the link mechanism 26, 27, and 28 operates to change the configuration angle of the illumination part 23 with respect to the head guard 18, and as a result, the irradiation direction *θ* changes. (B) of FIG. 5 shows a state in which the power cylinder 25 is extended and the irradiation direction *θ* is smaller as compared to (A) of FIG. 5.

### [Second Embodiment]

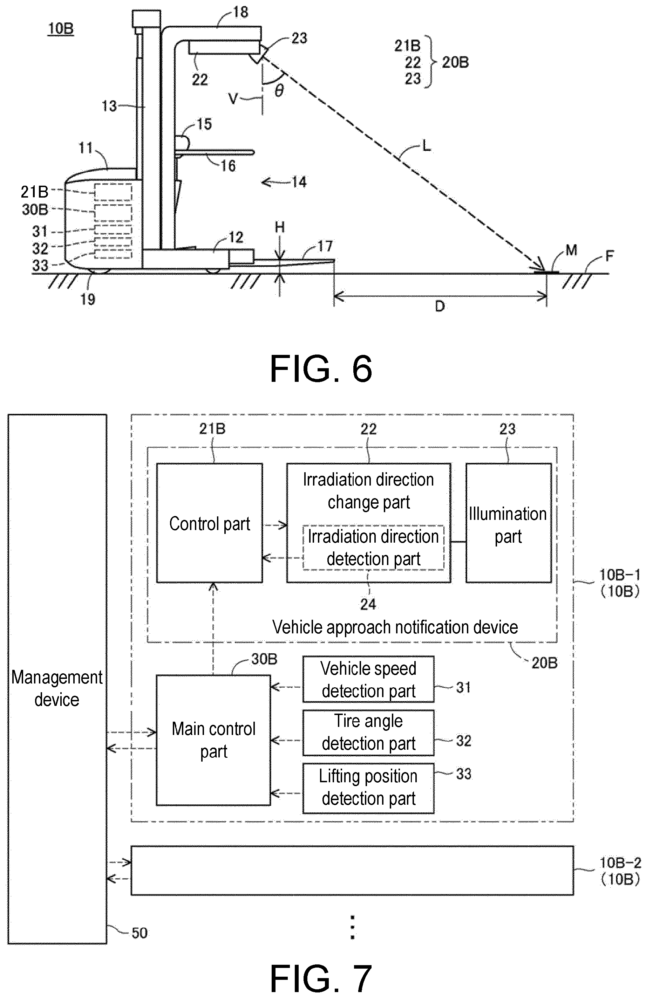

FIG. 6 shows a picking truck 10B according to a second embodiment of the present invention. The picking truck 10B differs from the picking truck 10A in that it includes a vehicle approach notification device 20B in place of the vehicle approach notification device 20A, includes a main control part 30B in place of the main control part 30A, and further includes a lifting position detection part 33, but is similar to the picking truck 10A in other aspects. Further, the vehicle approach notification device 20B differs from the vehicle approach notification device 20A in that it includes a control part 21B in place of the control part 21A, but is similar to the vehicle approach notification device 20A in other aspects.

As shown in FIG. 7, the picking truck 10B (10B-1, 10B-2 ...) according to this embodiment wirelessly communicates with the management device 50.

Specifically, the main control part 30B of the picking truck 10B-1 transmits and stores own-vehicle information to the management device 50 by wireless communication, and the own-vehicle information includes a vehicle speed detected by the vehicle speed detection part 31, a tire angle detected by the tire angle detection part 32, a current position in the operation area obtained by performing a calculation therefrom, and a lifting position H of the driving cab 14 detected by the lifting position detection part 33. At this time, the main control part 30B also sends the own-vehicle information to the control part 21B.

Another picking truck 10B-2 ... also transmits and stores own-vehicle information to the management device 50. As a result, the management device 50 collects the own-vehicle information of all the picking trucks 10B-1, 10B-2 ... operating in the operation area. The own-vehicle information of the picking truck 10B-2 stored in the management device 50 is other-vehicle information for the picking truck 10B-1.

The main control part 30B of the picking truck 10B-1 receives the other-vehicle information (i.e., the own-vehicle information of the picking truck 10B-2 ...) stored in the management device 50 by wireless communication and sends it to the control part 21B. The main control part 30B of the another picking truck 10B-2 ... also receives the other-vehicle information from the management device 50 and sends it to the control part 21B.

In this manner, the control part 21B of the vehicle approach notification device 20B provided in each picking truck 10B acquires the own-vehicle information including the current position, the vehicle speed, the tire angle, and the lifting position H of the own vehicle, and the other-vehicle information including the current position, the vehicle speed, and the tire angle of other vehicles. Then, based on the acquired own-vehicle information and other-vehicle information, the control part 21B changes the command sent to the irradiation direction change part 22 to change the irradiation direction *θ* and the irradiation distance D. In other words, when another vehicle that satisfies the three predetermined conditions above is present, the control part 21B changes the command sent to the irradiation direction change part 22 to keep the mark M away from the own vehicle. When the own vehicle does not move or does not move temporarily, it is possible not to have information such as the vehicle speed and the tire angle of the own vehicle.

In parallel with this, the control part 21B also changes the command sent to the irradiation direction change part 22 according to the lifting position H of the driving cab 14 included in the acquired own-vehicle information.

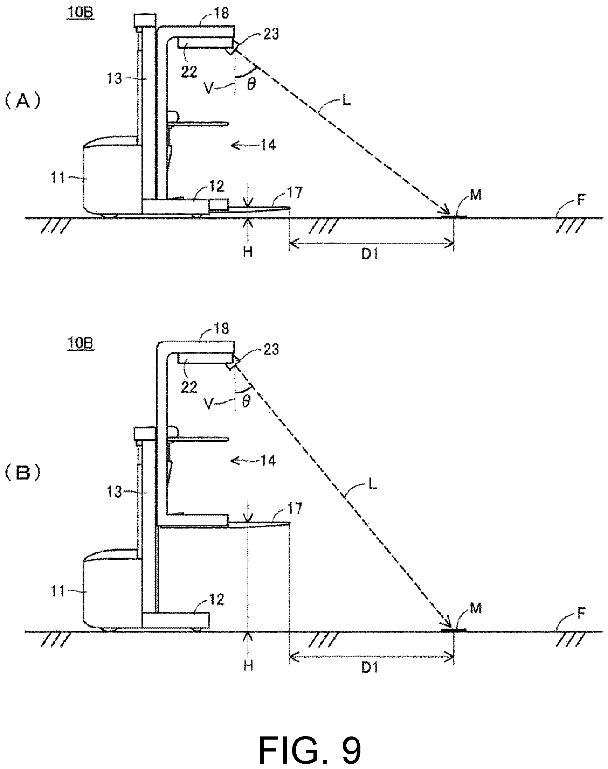

For example, in the case where another vehicle that satisfies the three predetermined conditions above is not present, when the lifting position H of the driving cab 14 of the own vehicle changes from H1 to H3 (where H3 > H1), the control part 21B maintains the irradiation distance D at D1 by decreasing the irradiation direction *θ* to *θ*3 corresponding to H3 (see (A) and (B) of FIG. 8, and FIG. 9). Further, in the case where another vehicle that satisfies the three predetermined conditions above is not present, when the lifting position H changes from H2 to H3 (where H2 > H3), the control part 21B maintains the irradiation distance D at D1 by increasing the irradiation direction *θ* to *θ*3 (see (A) and (B) of FIG. 8, and FIG. 9).

Similarly, in the case where another vehicle that satisfies the three predetermined conditions above is present, when the lifting position H changes from H1 to H3 (where H3 > H1), the control part 21B maintains the irradiation distance D at D2 by decreasing the irradiation direction *θ* to *θ*3' corresponding to H3 (see (C) and (D) of FIG. 8). Further, in the case where another vehicle that satisfies the three predetermined conditions above is present, when the lifting position H changes from H2 to H3 (where H2 > H3), the control part 21B maintains the irradiation distance D at D2 by increasing the irradiation direction *θ* to *θ*3' (see (C) and (D) of FIG. 8).

The control part 21B constantly performs control to maintain the irradiation distance D at D1 or D2.

As described above, in the picking trucks 10A and 10B and the vehicle approach notification devices 20A and 20B according to the first embodiment and the second embodiment of the present invention, the mark M of the notification light L moves away from the vehicle only when another vehicle approaching from the rear side is present. Therefore, according to the first embodiment and the second embodiment of the present invention, while minimizing annoyance to a person far away from the vehicle, it is possible to quickly notify the passenger of another vehicle, which may collide with the own vehicle, of the presence of the own vehicle.

Further, in the picking truck 10B and the vehicle approach notification device 20B according to the second embodiment of the present invention, the irradiation distance D does not change even if the lifting position H changes. Therefore, according to the second embodiment of the present invention, it is possible to prevent the mark M from becoming thin and the visibility from being lowered at the time of high lift.

### [Modification Example]

Although the first embodiment and the second embodiment of the picking truck and the vehicle approach notification device according to the present invention have been described above, the configuration of the present invention is not limited thereto.

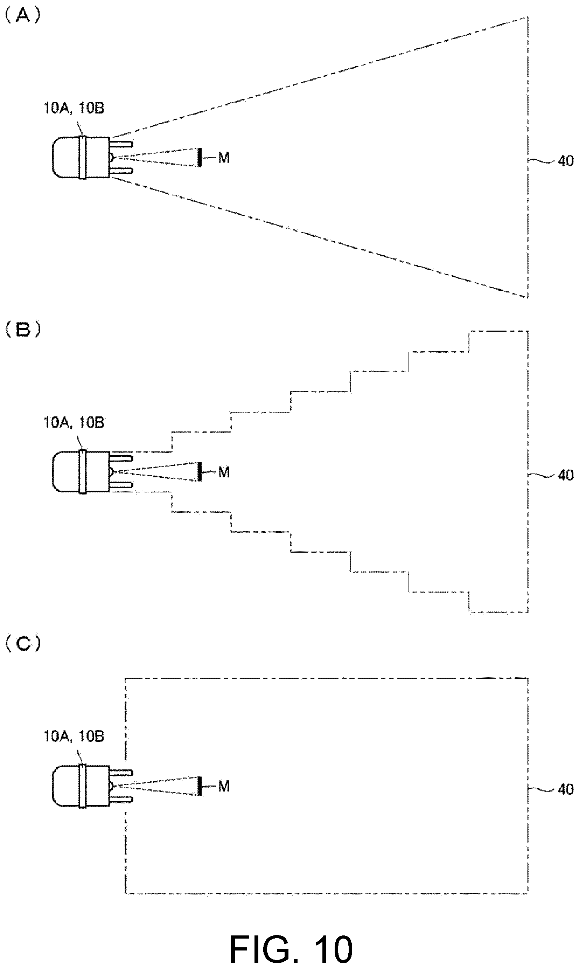

For example, the monitoring area 40 may have shapes shown in (A) to (C) of FIG. 10. However, to accurately find another vehicle that is approaching the own vehicle, it is preferable that the shape of the monitoring area 40 has a dimension in the vehicle width direction that increases as the distance from the rear side of the vehicle increases. In other words, the shape of the monitoring area 40 is preferably a substantially fan shape shown in FIG. 3(A) and FIG. 3(B), a substantially triangular shape shown in (A) of FIG. 10, and a shape shown in (B) of FIG. 10.

Further, the irradiation direction change part 22 and the illumination part 23 constituting the vehicle approach notification devices 20A and 20B may be provided at a portion other than the head guard 18 of the driving cab 14.

Further, the control parts 21A and 21B constituting the vehicle approach notification devices 20A and 20B may be provided on the driving cab 14 side instead of the vehicle body 11.

Further, the control parts 21A and 21B may acquire the other-vehicle information directly from the management device 50 rather than from the main control parts 30A and 30B.

Further, the own-vehicle information sent by the main control part 30A to the control part 21A may include at least the current position, the vehicle speed, and the tire angle of the own vehicle, and the own-vehicle information sent by the main control part 30B to the control part 21B may include at least the current position, the vehicle speed, the tire angle, and the lifting position H of the own vehicle. When the own vehicle does not move or does not move temporarily, it is also possible not to have information such as the vehicle speed and the tire angle of the own vehicle.

Further, the own-vehicle information transmitted by the main control parts 30A and 30B to the management device 50 may include at least the current position, the vehicle speed, and the tire angle of the own vehicle.

Further, the other-vehicle information acquired by the control parts 21A and 21B may include at least the current position, the vehicle speed, and the tire angle of other vehicles. As described above, the control parts 21A and 21B may acquire the other-vehicle information via the main control parts 30A and 30B, or may acquire the other-vehicle information directly from the management device 50.

Further, the control parts 21A and 21B may acquire the own-vehicle information from the management device 50 rather than from the main control parts 30A and 30B.

Further, the predetermined time "2 seconds" in the first embodiment and the second embodiment is merely an example and may be changed as appropriate.

Further, the vehicle approach notification device according to the present invention may be provided in a vehicle other than a picking truck that is provided with a driving cab which may be lifted and lowered.

### Description of Reference Numerals

- 10A, 10B: picking truck
- 10A-1, 10B-1: picking truck (own vehicle)
- 10A-2, 10B-2: picking truck (another vehicle)
- 11: vehicle body
- 12: leg
- 13: mast
- 14: driving cab
- 15: operation panel
- 16: fall guard
- 17: fork
- 18: head guard
- 19: tire
- 20A, 20B: vehicle approach notification device
- 21A, 21B: control part
- 22: irradiation direction change part
- 23: illumination part
- 24: irradiation direction detection part
- 25: power cylinder
- 26: first link member
- 27: second link member
- 28: third link member
- 29: support member
- 30A, 30B: main control part
- 31: vehicle speed detection part
- 32: tire angle detection part
- 33: lifting position detection part
- 40: monitoring area
- 50: management device

## Claims

1. A system, comprising vehicle approach notification devices (20A, 20B), and provided in each of a plurality of vehicles travelling
within a predetermined operation area, each vehicle approach notification device (20A, 20B) comprising:
an illumination part (23) that is disposed at a driving cab (14) of the vehicle and irradiates a notification light toward a road surface on a rear side of the vehicle;
an irradiation direction change part (22) that changes an irradiation direction by changing a configuration angle of the illumination part (23) with respect to the driving cab (14); and
a control part (21A, 21B) that changes a command associated with the configuration angle sent to the irradiation direction change part (22) based on own-vehicle information associated with an own vehicle and other-vehicle information associated with another vehicle,
wherein : :
the own-vehicle information comprises a current position of the own vehicle in the operation area, **characterised in that**:
the driving cab (14) is capable of being lifted and lowered;
the other-vehicle information comprises a current position of the another vehicle in the operation area, a tire angle of the another vehicle, and a speed of the another vehicle, and
in a case where (1) the current position of the another vehicle is within a predetermined monitoring area set on a rear side of the own vehicle, (2) a predicted position of the another vehicle after a predetermined time predicted from the current position, the tire angle, and the speed of the another vehicle is within the monitoring area after the predetermined time, and (3) the predicted position of the another vehicle is closer to a predicted position of the own vehicle than the current position of the another vehicle, the control part (21A, 21B) changes the command sent to the irradiation direction change part (22).

2. The system according to claim 1, wherein
the own-vehicle information further comprises a tire angle of the own vehicle and a speed of the own vehicle,
the monitoring area after the predetermined time is a monitoring area after the predetermined time predicted from the current position, the tire angle, and the speed of the own vehicle, and
the predicted position of the own vehicle is a position of the own vehicle after the predetermined time predicted from the current position, the tire angle, and the speed of the own vehicle.

3. The system according to claim 2, wherein the case where the predicted position of the another vehicle is closer to the predicted position of the own vehicle than the current position of the another vehicle comprises a case where a distance between the current position of the own vehicle and the current position of the another vehicle is longer than a distance between the predicted position of the own vehicle and the predicted position of the another vehicle.

4. The system according to any one of claims 1 to 3, wherein
when (1), (2), and (3) above are satisfied, the control part (21A, 21B) sends the irradiation direction change part (22) the command so that a position of the road surface to be irradiated moves away from the own vehicle.

5. The system according to any one of claims 1 to 4, comprising a management device configured to store vehicle information associated with each of the plurality of vehicles, wherein
the control part (21A, 21B) acquires vehicle information associated with the another vehicle as the other-vehicle information from the management device.

6. The system according to any one of claims 1 to 5, wherein
the own-vehicle information further comprises a lifting position of the driving cab (14), and
the control part (21A, 21B) sends the command to the irradiation direction change part (22) so that a position of the road surface to be irradiated does not change even if the lifting position changes.

7. The system according to any one of claims 1 to 6, wherein
the monitoring area has a substantially triangular shape or a substantially fan shape of which a dimension in a vehicle width direction increases as a distance from the rear side of the own vehicle increases.

8. The system according to any one of claims 1 to 7, wherein
the vehicles are picking trucks (10A, 10B).

## Patentansprüche

1. System, das Fahrzeugnäherungs-Benachrichtigungsvorrichtungen (20A, 20B) umfasst und in jedem von einer Vielzahl von Fahrzeugen bereitgestellt ist, die sich innerhalb eines vorgegebenen Betriebsbereich bewegen, wobei jede Fahrzeugnäherungs-Benachrichtigungsvorrichtung (20A, 20B) umfasst:
ein Beleuchtungsteil (23), das an einer Fahrerkabine (14) des Fahrzeugs angeordnet ist und ein Benachrichtigungslicht in Richtung einer Straßenoberfläche auf einer Rückseite des Fahrzeugs strahlt;
ein Bestrahlungsrichtungsänderungsteil (22), das eine Bestrahlungsrichtung durch Ändern eines Konfigurationswinkels des Beleuchtungsteils (23) in Bezug auf die Fahrerkabine (14) ändert; und
ein Steuerteil (21A, 21B), das einen mit dem Konfigurationswinkel assoziierten Befehl, der an das Bestrahlungsrichtungsänderungsteil (22) gesendet wird, basierend auf Eigenfahrzeuginformationen, die mit einem Eigenfahrzeug assoziiert sind, und Fremdfahrzeuginformationen, die mit einem Fremdfahrzeug assoziiert sind, ändert,
wobei die Eigenfahrzeuginformationen eine aktuelle Position des Eigenfahrzeug in dem Betriebsbereich umfassen, **dadurch gekennzeichnet, dass**
die Fahrerkabine (14) angehoben und gesenkt werden kann;
die Fremdfahrzeuginformationen eine aktuelle Position des Fremdfahrzeugs in dem Betriebsbereich, einen Reifenwinkel des Fremdfahrzeugs und eine Geschwindigkeit des Fremdfahrzeugs umfassen, und
in einem Fall, in dem (1) die aktuelle Position des Fremdfahrzeugs innerhalb eines vorbestimmten Überwachungsbereichs liegt, der auf einer Rückseite des Eigenfahrzeugs festgelegt ist, (2) eine vorhergesagte Position des Fremdfahrzeugs nach einer vorbestimmten Zeit, die aus der aktuellen Position, dem Reifenwinkel und der Geschwindigkeit des Fremdfahrzeugs vorhergesagt wird, innerhalb des Überwachungsbereich nach der vorbestimmten Zeit liegt, und (3) die vorhergesagte Position des Fremdfahrzeugs näher an einer vorhergesagten Position des Eigenfahrzeugs liegt als die aktuelle Position des Fremdfahrzeugs, ändert der Steuerteil (21A, 21B) den Befehl, gesendet an den Bestrahlungsrichtungsänderungsteil (22).

2. System gemäß Anspruch 1, wobei
die Informationen des Eigenfahrzeugs ferner einen Reifenwinkel des Eigenfahrzeugs und eine Geschwindigkeit des Eigenfahrzeugs umfassen,
der Überwachungsbereich nach der vorbestimmten Zeit ein Überwachungsbereich nach der vorbestimmten Zeit ist, der aus der aktuellen Position, dem Reifenwinkel und der Geschwindigkeit des Eigenfahrzeugs vorhergesagt wird, und
die vorhergesagte Position des Eigenfahrzeugs eine Position des Eigenfahrzeugs nach der vorbestimmten Zeit ist, die aus der aktuellen Position, dem Reifenwinkel und der Geschwindigkeit des Eigenfahrzeugs vorhergesagt wird.

3. System gemäß Anspruch 2, wobei der Fall, in dem die vorhergesagte Position des Fremdfahrzeugs näher an der vorhergesagten Position des Eigenfahrzeugs liegt als die aktuelle Position des Fremdfahrzeugs, einen Fall umfasst, in dem eine Entfernung zwischen der aktuellen Position des Eigenfahrzeugs und der aktuellen Position des Fremdfahrzeugs größer ist als eine Entfernung zwischen der vorhergesagten Position des Eigenfahrzeugs und der vorhergesagten Position des Fremdfahrzeugs.

4. System gemäß einem der Ansprüche 1 bis 3, wobei
wenn das Obige (1), (2) und (3) erfüllt ist, der Steuerteil (21A, 21B) dem Bestrahlungsrichtungsänderungsteil (22) den Befehl sendet, so dass sich eine Position der zu bestrahlenden Straßenoberfläche von dem Eigenfahrzeug wegbewegt.

5. System gemäß einem der Ansprüche 1 bis 4, umfassend eine Verwaltungsvorrichtung, die konfiguriert ist, um Fahrzeuginformationen zu speichern, die mit jedem der Vielzahl von Fahrzeugen assoziiert sind, wobei
der Steuerteil (21A, 21B) Fahrzeuginformationen, die mit dem Fremdfahrzeug assoziiert sind, als die Informationen des Fremdfahrzeugs von der Verwaltungsvorrichtung erfasst.

6. System gemäß einem der Ansprüche 1 bis 5, wobei
die Informationen über das Eigenfahrzeug ferner eine Hebeposition der Fahrerkabine (14) umfassen und
das Steuerteil (21A, 21B) den Befehl an das Bestrahlungsrichtungsänderungsteil (22) sendet, so dass sich eine Position der zu bestrahlenden Straßenoberfläche selbst dann nicht ändert, wenn sich die Hebeposition ändert.

7. System gemäß einem der Ansprüche 1 bis 6, wobei
der Überwachungsbereich eine im Wesentlichen dreieckige Form oder eine im Wesentlichen fächerförmige Form aufweist, bei der eine Abmessung in einer Richtung der Fahrzeugbreite mit zunehmender Entfernung von der Rückseite des Eigenfahrzeugs zunimmt.

8. System gemäß einem der Ansprüche 1 bis 7, wobei die Fahrzeuge Kommissionierstapler (10A, 10B) sind.

## Revendications

1. Système comprenant des dispositifs de notification d'approche de véhicule (20A, 20B) et disposés dans chacun d'une pluralité de véhicules circulant dans une zone de fonctionnement prédéterminée, chaque dispositif de notification d'approche de véhicule (20A, 20B) comprenant :
une partie d'éclairage (23) qui est disposée au niveau d'une cabine de conduite (14) du véhicule et qui émet une lumière de notification vers une surface de route sur un côté arrière du véhicule ;
une partie de changement de direction d'éclairage (22) qui change une direction d'éclairage en changeant un angle de configuration de la partie d'éclairage (23) par rapport à la cabine de conduite (14) ; et
une partie de commande (21A, 21B) qui modifie une commande associée à l'angle de configuration envoyée à la partie de changement de direction d'éclairage (22) en fonction des informations du véhicule propre associées à un véhicule propre et des informations relatives à l'autre véhicule associées à un autre véhicule, dans lequel les informations du véhicule propre comprennent une position actuelle du véhicule propre dans la zone de fonctionnement, **caractérisé en ce que** :
la cabine de conduite (14) est capable d'être soulevée et abaissée ;
les informations relatives à l'autre véhicule comprennent une position actuelle de l'autre véhicule dans la zone de fonctionnement, un angle de pneu de l'autre véhicule et une vitesse de l'autre véhicule, et
dans un cas où (1) la position actuelle de l'autre véhicule se trouve dans une zone de surveillance prédéterminée définie sur un côté arrière du propre véhicule, (2) une position prédite de l'autre véhicule après un temps prédéterminé prédit à partir de la position actuelle, de l'angle de pneu et de la vitesse de l'autre véhicule se trouve dans la zone de surveillance après le temps prédéterminé et (3) la position prédite de l'autre véhicule est plus proche d'une position prédite du propre véhicule que la position actuelle de l'autre véhicule, la partie de commande (21A, 21B) modifie la commande envoyée à la partie de changement de direction d'éclairage (22).

2. Système selon la revendication 1, dans lequel les informations du véhicule propre comprennent en outre un angle de pneu du véhicule propre et une vitesse du véhicule propre,
la zone de surveillance après le temps prédéterminé est une zone de surveillance après le temps prédéterminé prédite à partir de la position actuelle, l'angle de pneu et la vitesse du véhicule propre et
la position prédite du véhicule propre est une position du véhicule propre après le temps prédéterminé prédite à partir de la position actuelle, l'angle de pneu et la vitesse du véhicule propre.

3. Système selon la revendication 2, dans lequel le cas où la position prédite de l'autre véhicule est plus proche de la position prédite du véhicule propre que la position actuelle de l'autre véhicule comprend un cas où une distance entre la position actuelle du véhicule propre et la position actuelle de l'autre véhicule est plus longue qu'une distance entre la position prédite du véhicule propre et la position prédite de l'autre véhicule.

4. Système selon une quelconque des revendications 1 à 3, dans lequel lorsque (1), (2) et (3) ci-dessus sont satisfaites, la partie de commande (21A, 21B) envoie à la partie de changement de direction d'éclairage (22) la commande de sorte qu'une position de la surface de la route à irradier s'éloigne du véhicule propre.

5. Système selon une quelconque des revendications 1 à 4, comprenant un dispositif de gestion configuré pour mémoriser des informations de véhicule associées à chacun de la pluralité de véhicules, dans lequel la partie de commande (21A, 21B) acquiert des informations de véhicule associées à l'autre véhicule en tant qu'informations d'autre véhicule à partir du dispositif de gestion.

6. Système selon une quelconque des revendications 1 à 5, dans lequel les informations du véhicule propre comprennent en outre une position de levage de la cabine de conduite (14) et la partie de commande (21A, 21B) envoie la commande à la partie de changement de direction d'éclairage (22) de sorte qu'une position de la surface de la route à irradier ne change pas même si la position de levage change.

7. Système selon une quelconque des revendications 1 à 6, dans lequel la zone de surveillance a une forme substantiellement triangulaire ou une forme substantiellement en éventail dont une dimension dans une direction de largeur de véhicule augmente à mesure qu'une distance par rapport au côté arrière du véhicule propre augmente.

8. Système selon une quelconque des revendications 1 à 7, dans lequel les véhicules sont des camions de collecte (10A, 10B).
